# EUROPEAN PATENT APPLICATION

(11) **EP 2 749 547 A1**
(43) Date of publication of application: **02.07.2014**
(21) Application number: 12306511.2
(22) Date of filing: 04.12.2012
(51) Int. Cl.: C04B 24/00, C04B 24/12, C04B 28/04, C09K 8/467

(54) **Additive for well cementing applications**

(71) Applicant: Services Pétroliers Schlumberger, 75007 Paris (FR); Schlumberger Holdings Limited, Tortola (VG); Prad Research Development Limited, Tortola (VG); SCHLUMBERGER TECHNOLOGY B.V., 2514 JG Den Haag (NL)
(72) Inventor: Piot, Bernard, 92142 Clamart (FR); Finn, Narmina, 92142 Clamart (FR)
(74) Representative: Vandermolen, Mathieu

(57) **Abstract**

An additive for Portland-cement slurries comprises an alkanolamine polyborate. When added in concert with a set retarder, the alkanolamine polyborate minimizes or prevents premature gelation during placement in a subterranean well. The additive is particularly useful for highly reactive cements, and may reduce the amount of set retarder required to achieve a given placement time.

## Description

### BACKGROUND

The statements in this section merely provide background information related to the present disclosure and may not constitute prior art.

The present disclosure broadly relates to well cementing. More particularly, the disclosure relates to a cement additive, the use of the cement additive and related methods.

Cement slurries employed in well-cementing operations typically comprise Portland cement as a hydraulic binder. When water is added to the cement to form a slurry, hydration reactions occur that cause the slurry to initially gel and then harden to a solid over time. Well cementing generally involves preparing the slurry at the surface, and the slurry frequently contains liquid or solid additives that modify its chemical behavior and/or physical properties.

Retarders are additives that slow the hydration process, extending the time during which the slurry is pumpable. Delaying the setting time of a Portland-cement slurry becomes more difficult as well temperatures increase. In response, the industry has developed powerful retarders. However, the performance of these retarders may be unpredictable. Small retarder-concentration variations may cause large thickening-time fluctuations and affect the time at which strength begins to develop. For high-temperature wells, retarders are often supplemented with "retarder enhancers" such as boric acid and sodium borate (borax). Unfortunately, these chemicals are not always compatible with other high-temperature additives, causing difficulties with fluid-loss control and rheological properties. Therefore, there is an incentive to develop solutions for these problems.

Another common difficulty encountered in the context of well cementing is the variability of cement reactivity. Cement reactivity largely establishes how quickly a cement slurry will set, and it may also affect the rheological properties of the slurry. The well-cementing industry has established classification systems that provide a general indication of Portland-cement reactivity and suitability for a given cementing application. One classification system is that of the American Petroleum Institute (API). Portland cements meeting the API requirements are often more expensive than those manufactured for construction applications. Construction cements may be appropriate for low-temperature applications; however, they are often not sufficiently reliable in higher temperature applications. Their physical and compositional variability leads to unpredictable performance. Moreover, the response of construction cements to additives is often unpredictable, further increasing the risk of encountering difficulties during the cementing process. Therefore, there has been a need to find ways by which construction cements may be used in elevated-temperature applications.

During a cementing operation, the cement-slurry viscosity optimally remains low (e.g., < 20 Bc) throughout the placement period. Then, just after placement is completed, the slurry ideally gels and begins to set. Persons skilled in the art refer to this behavior as a "right-angle set." Unfortunately, with some cements, this ideal behavior is difficult to achieve. Frequently the slurry viscosity increases during the placement period. This may have negative consequences. For example, the pumping pressure required for placement may increase to a level that may lead to formation breakdown. Or the removal of drilling fluid from the annulus may be compromised, leading to poor bonding and failure to achieve zonal isolation. Without being bound to any theory, the premature gelation phenomenon may arise from uncontrolled hydration of the interstitial phases of Portland cement— tricalcium aluminate and tetracalcium aluminoferrite.

### SUMMARY

The present disclosure reveals compositions and methods by which premature cement-slurry gelation may be prevented.

In an aspect, embodiments relate to well cementing compositions comprising water, Portland cement, a set retarder and an alkanolamine polyborate compound.

In a further aspect, embodiments relate to methods for cementing a subterranean well having a borehole. A well cementing composition is prepared that comprises water, Portland cement, a set retarder and an alkanolamine polyborate compound. The composition is then placed in the well.

In yet a further aspect, embodiments relate to methods for inhibiting cement slurry gelation. A well cementing composition is prepared that comprises water, Portland cement, a set retarder and an alkanolamine polyborate compound. The composition is then placed in the well.

### BRIEF DESCRIPTON OF THE DRAWINGS

Figure 1 shows a thickening-time curve for a cement slurry that did not contain monoethanolamine triborate.

Figure 2 shows a thickening-time curve for a cement slurry that contained monoethanolamine triborate.

### DETAILED DESCRIPTION

At the outset, it should be noted that in the development of any such actual embodiment, numerous implementation—specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

The Applicant has determined that premature gelation of Portland cement slurries may be prevented or minimized by incorporating one or more alkanolamine polyborate compounds in addition to a set retarder. The alkanolamine polyborate compounds may not be effective retarders by themselves; instead, they may complement the function of set retarders. Without wishing to be bound by any theory, the alkanolamine polyborate compounds may help control the hydration of the interstitial phases of Portland cement—tricalcium aluminate and tetracalcium aluminoferrite. The incorporation of alkanolamine borate compounds may, however, reduce the amount of set retarder required to achieve a given placement time.

In an aspect, embodiments relate to well cementing compositions that comprise water, Portland cement, a set retarder and an alkanolamine polyborate compound.

In a further aspect, embodiments relate to methods for cementing a subterranean well having a borehole. A well cementing composition is prepared that comprises water, Portland cement, a set retarder and an alkanolamine polyborate compound. The composition is then placed in the well. The compositions may be placed into the well during either a primary cementing operation or a remedial cementing operation. The primary cementing operation may be the conventional procedure wherein the cement slurry is pumped down casing and up the annulus, or the "reverse cementing" technique during which the slurry is pumped down the annulus.

In yet a further aspect, embodiments relate to methods for inhibiting cement slurry gelation. A well cementing composition is prepared that comprises water, Portland cement, a set retarder and an alkanolamine polyborate compound. The composition is then placed in the well.

For all aspects, the alkanolamine polyborate may be derived from an alkanolamine comprising monoethanolamine, diethanolamine, triethanolamine, 1-amino-2-propanol or 1-amino-2-butanol or combinations thereof. The alkanolamine polyborate concentration in the slurry may be between 1L/tonne of cement and 50L/tonne of cement, or the concentration may be between 5L/tonne of cement and 30L/tonne of cement. The alkanolamine polyborate may be monoethanolamine triborate.

For all aspects, the set retarder may comprise a lignosulfonate, a phosphonate, tartaric acid, citric acid, monosaccharides and their derivatives, disaccharides and their derivatives, a gluconate, a glucoheptonate or maleic acid, maleic anhydride, malic acid, humic acid, fumaric acid, succinic acid and their salts, or a combination thereof. The cement compositions may further comprise an extender, a weighting material, a fluid-loss additive, a dispersant, an antifoam agent or a gas-generating agent or a combination thereof.

For all aspects, the bottomhole circulating temperature in the well may be between about 70°C and 200°C.

### EXAMPLE

The present disclosure may be further understood from the following example.

The tests were performed with the same base slurry: Holcim Brasil Class G cement + 35% by weight of cement (BWOC) silica flour. The slurry density was 2100 kg/m³ (17.5 lbm/gal).

Testing was performed in accordance with recommended procedures published by the American Petroleum Institute: Recommended Practice for Testing Well Cements, ANSI/API Recommended Practice 10B-2, 1st Edition, Washington DC: American Petroleum Institute (2005*).*

Two cement slurries were prepared with the base slurry composition described earlier. Additional materials and their concentrations are listed in Table 1.

**Table 1. Cement slurry compositions.**

| **Slurry 1** | | **Slurry 2** | |
|---|---|---|---|
| **Additive** | **Concentration** | **Additive** | **Concentration** |
| Biopolymer Antisettling Agent | 0.5% BWOC | Biopolymer Antisettling Agent | 0.5% BWOC |
| Silicone Antifoam Agent | 4.4 L/tonne of cement | Silicone Antifoam Agent | 4.4 L/tonne of cement |
| Polynaphthalene | 5.3 L/tonne of | Polynaphthalene | 5.3 L/tonne of |

| Sulfonate Dispersant | cement | Sulfonate Dispersant | cement |
|---|---|---|---|
| GASBLOK™ High Temperature Additive | 231 L/tonne of cement | GASBLOK™ High Temperature Additive | 231 L/tonne of cement |
| Manganese Tetraoxide | 25% BWOC | Manganese Tetraoxide | 25% BWOC |
| Lignosulfonate/Gluconate Retarder | 17.8 L/tonne of cement | Lignosulfonate/Gluconate Retarder | 13.3 L/tonne of cement |
| Monoethanolamine Triborate | - | Monoethanolamine Triborate | 17.8 L/tonne of cement |

The difference between Slurry 1 and Slurry 2 was that Slurry 2 contained monoethanolamine triborate.

All additives with the exception of the monoethanolamine triborate are available from Schlumberger. The monethanolamine triborate was SYNTRHO-BORE BL 11%, available from Synthron, Levallois-Perret, France.

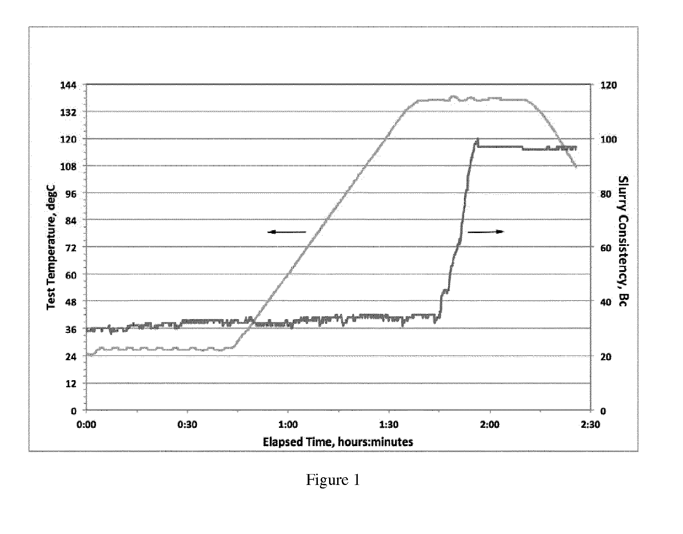

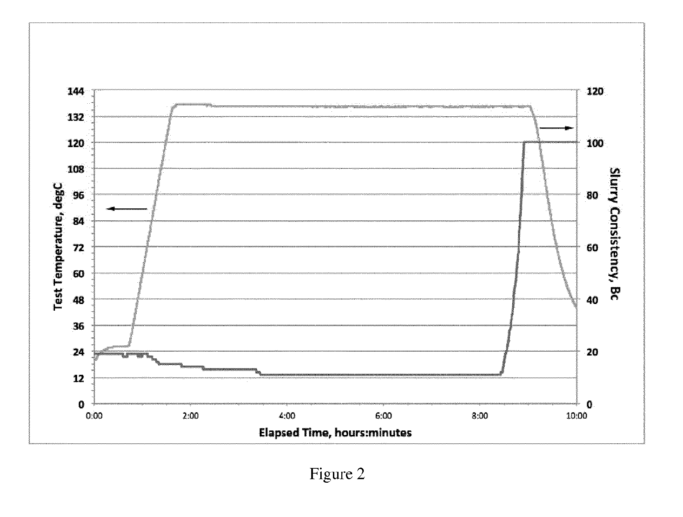

Thickening time tests were performed with both slurries at a bottomhole circulating temperature of 137°C (278°F). The thickening-time curves for Slurry 1 and Slurry 2 are presented in Figs. 1 and 2, respectively.

Inspection of Fig. 1 reveals that Slurry 1, which did not contain monoethanolamine triborate, had a viscosity above 30 Bc from the beginning of the test until it began to set after about 1 hour, 45 minutes. Fig. 2 shows that Slurry 2, which did contain monoethanolamine borate, had a viscosity below 20 Bc from the beginning of the test until it began to set after about 8 hours. It is also notable that Slurry 2 contained less set retarder than Slurry 1, yet exhibited better properties.

Although various embodiments have been described with respect to enabling disclosures, it is to be understood that this document is not limited to the disclosed embodiments. Variations and modifications that would occur to one of skill in the art upon reading the specification are also within the scope of the disclosure, which is defined in the appended claims.

## Claims

1. A well cementing composition, comprising water, Portland cement, a set retarder and an alkanolamine polyborate compound.

2. The composition of claim 1, wherein the alkanolamine polyborate is derived from an alkanolamine that comprises monoethanolamine, diethanolamine, triethanolamine, 1-amino-2-propanol or 1-amino-2-butanol or combinations thereof.

3. The composition of claim 1 or 2, wherein the alkanolamine polyborate compound comprises monoethanolamine triborate.

4. The composition of any one of claims 1-3, wherein the alkanolamine polyborate concentration is between 1L/tonne of cement and 50 L/tonne of cement.

5. The composition of any one of claims 1-4, wherein the set retarder comprises a lignosulfonate, a phosphonate, tartaric acid, citric acid, monosaccharides and their derivatives, disaccharides and their derivatives, a gluconate, a glucoheptonate or maleic acid, maleic anhydride, malic acid, humic acid, fumaric acid, succinic acid and their salts, or a combination thereof.

6. The composition of any one of claims 1-5, further comprising an extender, a weighting material, a dispersant, a fluid-loss additive, an antifoam agent or a gas generating agent or a combination thereof.

7. A method for cementing a subterranean well having a borehole, comprising:
(i) preparing a well cementing composition, the composition comprising water, Portland cement, a set retarder and an alkanolamine polyborate compound; and
(ii) placing the composition into the well.

8. The method of claim 7, wherein the composition is placed into the well during a primary cementing operation.

9. The method of claim 7 or 8, wherein the composition is placed into the well during a remedial cementing operation.

10. The method of any one of claims 7-9, wherein the alkanolamine polyborate is derived from an alkanolamine that comprises monoethanolamine, diethanolamine, triethanolamine, 1-amino-2-propanol or 1-amino-2-butanol or combinations thereof.

11. The method of any one of claims 7-10, wherein the alkanolamine polyborate compound comprises monoethanolamine triborate.

12. The method of any one of claims 7-11, wherein the set retarder comprises a lignosulfonate, a phosphonate, tartaric acid, citric acid, monosaccharides and their derivatives, disaccharides and their derivatives, a gluconate, a glucoheptonate or maleic acid, maleic anhydride, malic acid, humic acid, fumaric acid, succinic acid and their salts, or a combination thereof.

13. The method of any one of claims 7-12, wherein the composition further comprises an extender, a weighting material, a dispersant, a fluid-loss additive, an antifoam agent or a gas generating agent or a combination thereof.

14. The method of any one of claims 7-13, wherein the bottomhole circulating temperature in the well is between 1L/tonne of cement and 50 L/tonne of cement.

15. A method for inhibiting cement slurry gelation, comprising:
(i) preparing a well cementing composition, the composition comprising water, Portland cement, a set retarder and an alkanolamine polyborate compound; and
(ii) placing the composition into the well.
